**Europäisches Patentamt**

**European Patent Office**

**Office européen des brevets**

(19)

(11) Veröffentlichungsnummer : **0 300 355 B1**

(12)                          EUROPÄISCHE PATENTSCHRIFT

(45) Veröffentlichungstag der Patentschrift :
29.05.91 Patentblatt 91/22

(51) Int. Cl.$^5$ : **F16C 7/02**

(21) Anmeldenummer : **88111268.4**

(22) Anmeldetag : **14.07.88**

(54) Pleuelstange, insbesondere für Brennkraftmaschinen, mit einem geteilten Pleuelauge.

(30) Priorität : **24.07.87 DE 3724498**

(43) Veröffentlichungstag der Anmeldung :
**25.01.89 Patentblatt 89/04**

(45) Bekanntmachung des Hinweises auf die
Patenterteilung :
**29.05.91 Patentblatt 91/22**

(84) Benannte Vertragsstaaten :
**DE ES FR GB IT SE**

(56) Entgegenhaltungen :
**DE-B- 1 185 011**
**FR-A- 734 972**
**GB-A- 413 272**
**GB-A- 1 024 060**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Kerzendorf, Gerhard
Am Strassland 4
W-8011 Kirchheim (DE)**
Erfinder : **Spindelböck, Dieter
REichenberger Strasse 3
W-8068 Pfaffenhofen (DE)**

## Beschreibung

Die Erfindung geht gemäß dem Oberbegriff des unabhängigen Patentanspruches von der GB-A-413 272 aus.

Bei dieser bekannten Pleuelstange sind die Stützrippen als ringförmige Stege am Pleuelauge bzw. Pleuelkopf und Pleueldeckel um die Aufnahmebohrung vorgesehen und in einem gegenseitigen, axialen Abstand angeordnet. Zwischen diesen Stützstegen weist das geteilte Pleuelauge Augen zur Aufnahme der Schraubbolzen für die Pleueldeckel-Verschraubung auf. Die einerseits der Aufnahmebohrung des Pleullagers eng benachbarten Augen für die Verschraubung sind andererseits zwischen den Stützstegen über etwa den halben äußeren Umfangsbereich von den Stützstegen getrennt ausgebildet. Zu dieser biegeweichen Ausgestaltung der Augen für die Verschraubung tritt in weiterer nachteiliger Weise der Umstand relativ kleiner Trennflächen an Pleuelkopf und Pleueldeckel in der Trennfuge um die Bohrungen der Schraubbolzen durch gezielte Abflachung der Augen für die Verschraubung im äußeren Umfangsbereich hinzu. Somit ist bei dieser bekannten Pleuelstange mit den ringförmigen Stützstegen zwar eine wirksame Maßnahme gegen dynamische Verformungen des Pleuelauges angegeben, sie ist jedoch durch eine unzureichend steife Verschraubung wenig wirksam.

Eine weitere, gewichtsoptimiert gestaltete Pleuelstange ist ferner aus der DE-B-1 185 011 bekannt, bei der die Gesamtgröße der die Trennfuge begrenzenden Trennflächen am Pleuelkopf und Pleueldeckel ebenfalls relativ kleingehalten ist. Dies kann in Verbindung mit der Forderung von Mindestabständen der Schraubbolzen der Pleueldeckel-Verschraubung von der Aufnahmebohrung für die Schraubbolzen eine von den Flächenschwerpunkten der zusammenwirkenden Trennflächen entfernte Anordnung ergeben mit dem Nachteil, daß die von der Aufnahmebohrung ferner liegenden Trennflächenanteile deutlich höher belastet sind. Diese höheren Belastungen führen zu elastischen Deformationen der gegeneinander verspannten Trennflächen. Und zwar ergeben sich bereits biegeelastische Verformungen von Pleuelkopf und Pleueldeckel bei der gegenseitigen Verspannung mittels der Pleueldeckel-Verschraubung, insbesondere bei einer Pleuelstange für hochdrehende Hubkolben-Brennkraftmaschinen.

Diese biegeelastische Verformung tritt zudem verstärkt auf bei in der Aufnahmebohrung mit Überstand in der Trennfuge angeordneten Lagerelementen, insbesondere Gleit-Lagerschalen, die für einen betriebssicheren Preßsitz in der Aufnahmebohrung in der Trennfuge von Pleuelkopf und Pleueldeckel gegeneinander über die Pleueldeckel-Verschraubung verspannt werden. Diese weitere Verformung von Pleuekopf und Pleueldeckel führt bereits im statischen Zustand des Pleuelauges beiderseits der Trennfuge zu von der Kreisform abweichenden Umfangsabschnitten der Aufnahmebohrung. Weiter ergeben sich für die Schraubbolzen der Pleueldeckel-Verschraubung zur Aufnahmebohrung gerichtete elastische Durchbiegungen, die bei hohen Drehzahlen einer schnellaufenden Hubkolben-Brennkraftmaschine die Pleueldeckel-Verschraubung zusätzlich dynamisch ungünstig beeinflussen können.

Die in der o.g. DE-B-1 185 011 beschriebene Vergrößerung der Trennflächen durch beiderseits der Trennfuge an Pleuelkopf und Pleueldeckel angeordnete Flanschrippen bringt bei hochbelasteten Pleuelstangen in schnellaufenden Brennkraftmaschinen nicht den erwarteten Erfolg.

Der Erfindung liegt die Aufgabe zugrunde, für eine Pleuelstange der gattungsgemäßen Bauart bei gewichtsoptimierter Gestaltung eine Ausbildung aufzuzeigen, mit der die biegeelastische Verformung des Pleuelauges im statischen und dynamischen Zustand reduziert werden kann.

Diese Aufgabe wird durch die im Kennzeichen des Hauptanspruches angegebenen Merkmale gelöst. Der Vorteil der Erfindung liegt in einer reduzierten Verformung des geteilten Pleuelauges, wobei ein über die Stützrippen gezielt gelenkter Kraftfluß der Pleueldeckel-Verschraubung eine gleichmäßigere Lastverteilung in den hochbelasteten Trennflächen-Anteilen ergibt mit verminderter elastischer Deformation der gegeneinander verspannten Trennflächen.

Bei der im Hinblick auf eine gewichtsoptimierte Pleuelstange vorteilhaften Ausgestaltung der Erfindung nach Anspruch 2 werden für sich bekannte, beiderseits der Trennfuge am Pleuelauge angeordnete Flanschrippen mit den erfindungsgemäßen Stützrippen kombiniert. Wie Versuche gezeigt haben, kann erst mit erfindungsgemäßen Stützrippen die durch die Flanschrippen gegebene Vergrößerung der Trennflächen voll genutzt werden, weil über die Stützrippen der Kraftfluß der Pleueldeckel-Verschraubung uneingeschränkt bis an die Begrenzungen der Trennflächen in diese eingeleitet werden kann.

Mit der im Anspruch 3 beschriebenen weiteren Ausgestaltung der Erfindung wird der Kraftfluß der Pleueldeckel-Verschraubung vorteilhaft in einen der Stützrippe benachbarten Bereich in die Flanschrippe zusätzlich eingeleitet. Damit sind hochfrequente Schwingungen freier Flanschrippen-Teile vermieden und die Lastverteilung damit weiter begünstigt.

Die im Anspruch 4 beschriebenen Merkmale ergeben neben einem zusätzlich ausgesteiften Pleuelkopf weiter eine zusätzliche Kraftflußeinleitung in die Stützrippen.

Schließlich ist mit Anspruch 5 eine für die Einleitung des Kraftflusses aus der Pleueldeckel-Verschraubung günstige Anordnung der Stützrippen relativ zum jeweiligen Schraubbolzen beschrieben, die für eine vergleichmäßigte Lastverteilung in den Trennflächen der Trennfuge vorteilhaft ist. Um ferner die Kraftflußanteile der Stützrippen zur Gänze in die ihnen zugeordneten Querschnitte der Trennflächen einzubringen, sind die in mit zugeordneten Durchgangsbohrungen tangierenden Ebenen angeordneten Stützrippen damit zugleich zu den Achsen der Schraubbolzen der Pleueldeckel-Verschraubung im wesentlichen parallel verlaufend angeordnet.

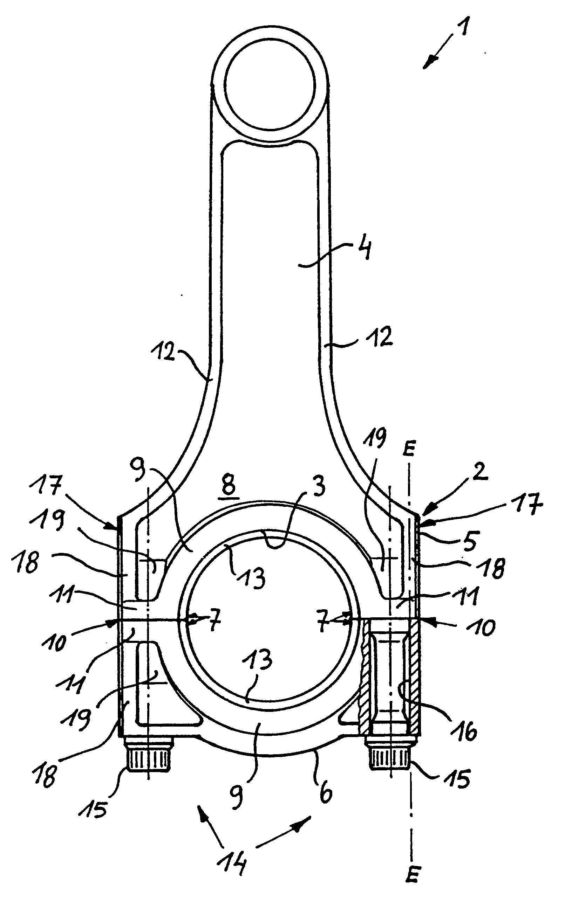

Ein bevorzugtes Ausführungsbeispiel der Erfindung ist anhand der Zeichnung beschrieben.

Eine Pleuelstange 1 für eine nicht dargestellte, schnellaufende Hubkolben-Brennkraftmaschine weist ein geteiltes Pleuelauge 2 auf. Eine den Kurbelzapfen einer nicht gezeigten Kurbelwelle der Hubkolben-Brennkraftmaschine mittel- oder unmittelbar umschließende Aufnahmebohrung 3 im Pleuelauge 2 ist von einem mit dem Pleuelschaft 4 verbundenen Pleuelkopf 5 und einem gesonderten Pleueldeckel 6 begrenzt. Ferner weist das Pleuelauge 2 an beiden Stirnseiten 8 zur Aufnahmebohrung 3 konzentrische, axial vorspringende Anlaufbunde 9 auf. Die Anlaufbunde 9 stehen auf jeder Stirnseite 8 mit zur Trennfuge 10 am Pleuelkopf 5 und Pleueldeckel 6 parallelen, über die Stirnseiten 8 vorspringenden Flanschrippen 11 in Verbindung. Weiter weist der Pleuelschaft 4 einen I-Querschnitt auf, wobei Rippen 12 des Pleuelschaftes 4 bis in seitliche Begrenzungen des Pleuelkopfes 5 verlängert sind und von der Trennfuge 10 beabstandet enden.

In der Aufnahmebohrung 3 sind in der Ebene der Trennfuge 10 im wesentlichen hälftig geteilte Gleit-Lagerschalen 13 angeordnet. Die Lagerschalen 13 weisen einen quer zur Trennfuge 10 gerichteten, vorbestimmten Überstand 7 auf, der dazu dient, bei der Anordnung des gesonderten Pleueldeckels 6 am Pleuelkopf 5 mittels einer Pleueldeckel-Verschraubung 14 die Lagerschalen 13 für einen betriebssicheren Preßsitz in axialer Richtung sowie in Umfangsrichtung in der Aufnahmebohrung 3 zu verspannen. Die Pleueldeckel-Verschraubung 14 umfaßt Schraubbolzen 15, die im Lagerdeckel 6 angeordnete Durchgangsbohrungen 16 mit Spiel durchsetzen und im Pleuelkopf 5 verschraubt sind.

Um bei der Verschraubung des Pleueldeckels 6 mit dem Pleuelkopf 5 die durch den Überstand 7 an den Lagerschalen 13 bewirkte biegeelastische Verformung durch eine günstige Lastverteilung in den in der Trennfuge 10 gegeneinander verspannten Trennflächen nahe den Schmalseiten 17 des Pleuelauges 2 zu reduzieren, sind am Pleuelkopf 5 und Pleueldeckel 6 von den Lagerschalen 13 jenseits der Pleueldeckel-Verschraubung 14 bzw. den Schraubbolzen 15 beabstandete, im wesentlichen quer zur Trennfuge 10 gerichtete Stützrippen 18 angeordnet, die in der Trennfuge 10 über miteinander korrespondierende Querschnitte in Verbindung stehen und sich mindestens bis zu den jeweiligen Kraftangriffsbereichen der Schraubbolzen 15 erstrecken. An dem die Gewindebohrungen für die Schraubbolzen 15 aufweisenden Pleuelkopf 5 sind die Stützrippen 18 an den Stirnseiten 8 von den benachbarten Flanschrippen 11 zu den Rippen 12 des Schaftes 4 sich erstreckend angeordnet. Am Pleueldeckel 6 sind die Stützrippen 18 von den benachbarten Flanschrippen 11 zu den Auflagebereichen der Spannköpfe der Schraubbolzen 15 sich erstreckend angeordnet. Zur Erzielung eines über die Stützrippen 18 gezielt gelenkten Kraftflusses der Pleueldeckel-Verschraubung 14 für eine gleichmäßigere Lastverteilung in den hochbelasteten Trennflächen-Anteilen nahe den Schmalseiten 17 des Pleuelauges 2 mit verminderter elastischer Deformation der gegeneinander verspannten Trennflächen in der Trennfuge 10 sind die am Pleuelkopf 5 und Pleueldeckel 6 als seitliche Begrenzungen dienenden Stützrippen 18 an beiden Stirnseiten 8 des Pleuelauges 2 jeweils in einer die jeweilige Durchgangsbohrung 16 etwa tangierenden Ebene "E" angeordnet. Mit dieser Anordnung ist ein im wesentlichen zu den Achsen der Schraubbolzen 15 paralleler Verlauf der Stützrippen 18 erreicht, wodurch die Kraftflußanteile der Stützrippen 18 zur Gänze in die ihnen zugeordneten Querschnitte der Trennflächen eingebracht sind und wesentlich zur vergleichmäßigten Lastverteilung in der Trennfuge beitragen.

Zur weiteren günstigen Beeinflussung der Lastverteilung können die Flanschrippen 11 zwischen den Stützrippen 18 und den benachbarten Anlaufbunden 9 jeweils über eine Schräge 19 mit den Stirnseiten 8 des Pleuelauges 2 in Verbindung stehen, wobei jede Schräge mit der Pleuelmittenebene einen Winkel zwischen 15° und 45° einschließt.

**Ansprüche**

1. Pleuelstange, insbesondere für Brennkraftmaschinen,
   – umfassend ein geteiltes Pleuelauge (2) mit einer Aufnahmebohrung (3) benachbart angeordneten Augen zur Aufnahme von Schraubbolzen (15) zur verschraubbaren Anordnung eines Pleueldeckels (6) an einem Pleuelkopf (5) des Pleuelschaftes (4), wobei
   – das Pleuelauge (2) ferner quer zu der Trennfuge (10) zwischen Pleuelkopf (5) und Pleueldeckel (6) gerichtete und miteinander über korrespondierende Querschnitte in Verbindung stehende Stützrippen (18) nahe den Schraubbolzen (15) aufweist, dadurch gekennzeichnet,
   – daß die Stützrippen (18) auf den die Schraubbolzen (15) aufnehmenden Augen nahe deren äußerer Begrenzung über die Stirnseiten (8) des Pleuelauges (2) vorspringend angeordnet sind.

2. Pleuelstange nach Anspruch 1,
   – wobei das Pleuelauge (2) an beiden Stirnseiten (8) zur Aufnahmebohrung (3) konzentrische, axial vorspringende Anlaufbunde (9) aufweist,
– die mit zur Trennfuge (10) an Pleuelkopf (5) und Pleueldeckel (6) parallelen, über die Stirnseiten (8) vorspringende Flanschrippen (11) in Verbindung stehen, dadurch gekennzeichnet,
– daß die Stützrippen (18) als im wesentlichen seitliche Begrenzungen an Pleuelkopf (5) und Pleueldeckel (6) sich jeweils von den Flanschrippen (11) bis zu den jeweiligen Kraftangriffsbereichen der Pleueldeckel-Verschraubung (14) erstrecken.

3. Pleuelstange nach Anspruch 2, dadurch gekennzeichnet,
– daß zwischen Stützrippen (18) und den benachbarten Anlaufbunden (9) die Flanschrippen (11) jeweils über eine Schräge (19) mit den Stirnseiten (8) des Pleuelauges (2) in Verbindung stehen,
– wobei jede Schräge mit der Pleuelmittenebene einen Winkel zwischen 15° und 45° einschließt.

4. Pleuelstange nach einem oder mehreren der Ansprüche 1-3,
– wobei der Pleuelschaft (4) einen I-Querschnitt aufweist, und
– die Rippen (12) des Pleuelschaftes (4) bis zu den Schmalseiten (17) des Pleuelkopfes (5) verlängert sind und von der Trennfuge (10) beabstandet enden, dadurch gekennzeichnet,
– daß die Stützrippen (18) mit den Rippen (12) des Pleuelschaftes (4) in Verbindung stehen.

5. Pleuelstange nach einem oder mehreren der Ansprüche 1-4,
– wobei die Pleueldeckel-Verschraubung (14) zumindest in einem Teil des geteilten Pleuelauges (2 ; Pleuelkopf 5 ; Pleueldeckel 6) eine von einem Schraubbolzen (15) mit Spiel durchsetzte Durchgangsbohrung (16) umfaßt, dadurch gekennzeichnet,
– daß die mit den Augen zur Aufnahme der Schraubbolzen (15) der Pleueldeckel-Verschraubung (14) verbundenen Stützrippen (18) an beiden Stirnseiten (8) des Pleuelauges (2) bzw. des Pleuelkopfes (5) und des Pleueldeckels (6) in einer die jeweilige Durchgansbohrung (16) etwa tangierenden Ebene 8 ("E") angeordnet sind.

## Claims

1. A connecting rod, especially for internal-combustion engines,
– comprising a divided connecting rod eye (2) with eyes, arranged adjacent to a receiving bore (3), to receive screw bolts (15) for the screwable arrangement of a connecting rod cover (6) on a connecting rod head (5) of the connecting rod shank (4), wherein
– the connecting rod eye (2) additionally has, close to the screw bolts (15), support ribs (18) which are directed transversely to the plane of separation (10) between the connecting rod head (5) and the connecting rod cover (6) and are connected with each other via corresponding cross-sections,
characterised in that
– the support ribs (18) are arranged on the eyes receiving the screw bolts (15) close to their outer delimitation, projecting over the faces (8) of the connecting rod eye (2).

2. A connecting rod according to Claim 1,
– wherein the connecting rod eye (2) on both faces (8) has axially – projecting run-up collars (9) which are concentric to the receiving bore (3),
– which are connected with flange ribs (11) which are parallel to the plane of separation (10) on the connecting rod head (5) and connecting rod cover (6) and project over the faces (8),
characterised in that
– the support ribs (18), as substantially lateral delimitations on the connecting rod head (5) and connecting rod cover (6), extend respectively from the flange ribs (11) up to the respective regions of application of force of the connecting rod cover screw coupling (14).

3. A connecting rod according to Claim 2, characterised in that
– between support ribs (18) and the adjacent run-up collars (9), the flange ribs (11) are connected respectively via an inclination (19) with the faces (8) of the connecting rod eye (2),
– wherein each inclination forms an angle of between 15° and 45° with the connecting rod centre plane.

4. A connecting rod according to one or more of Claims 1-3,
– wherein the connecting rod shank (4) has an I-section, and
– the ribs (12) of the connecting rod shank (4) are extended up to the narrow sides (17) of the connecting rod head (5) and end at a distance from the plane of separation (10),
characterised in that
– the support ribs (18) are connected with the ribs (12) of the connecting rod shank (4).

5. A connecting rod according to one or more of Claims 1-4,
– wherein the connecting rod cover screw coupling (14) comprises, at least in a part of the divided connecting rod eye, (2 ; connecting rod head 5 ; connecting rod cover 6) a through-bore (16) penetrated with play by a screw bolt (15),
characterised in that
– the support ribs (18) connected with the eyes to receive the screw bolts (15) of the connecting rod cover screw coupling (14) on both faces (8) of the connecting rod eye (2) or, respectively, of the connecting rod head (5) and of the connecting rod cover (6) are arranged in a plane 8 ("E") approximately tangent to the respective through-bore (16).

## Revendications

1. Bielle notamment pour moteur à combustion interne, comprenant :
   – une tête de bielle (2) divisée comportant des logements pour recevoir des boulons (15) au voisinage de l'alésage (3), pour visser le chapeau de bielle (6) sur l'embase (5) du corps de bielle (4),
   – la tête de bielle (2) comportant en outre, transversalement au joint (10) séparant l'embase (5) et le chapeau (6), des nervures d'appui (18) qui sont reliées par des sections correspondantes,
   bielle caractérisée en ce que :
   – les nervures d'appui (18) viennent en saillie par rapport aux faces (8) de la tête de bielle (2) à leur limite extérieure recevant les logements pour les boulons (15) et au voisinage de ces logements.

2. Bielle selon la revendication 1, dont la tête (2) comporte sur les deux faces (8) des collets (9) venant axialement aux saillies de manière concentrique à l'alésage (3), par rapport aux deux faces (8),
   – les nervures de bride (11) en saillie par rapport aux faces (8) sont parallèles au joint (10) séparant l'embase (5) et le chapeau de bielle (6),
   bielle caractérisée en ce que :
   – les nervures d'appui (18) sont principalement constituées par les limites latérales de l'embase (5) et du chapeau (6) en s'étendant respectivement des nervures de bride (11) jusqu'aux zones d'application respectives des efforts de la liaison par vis (14) du chapeau de bielle.

3. Bielle selon la revendication 2,
   caractérisée en ce que :
   – entre les nervures d'appui (18) et les collets (9) voisins, les nervures de bride (11) sont reliées aux faces (8) de la tête de bielle (2) par une surface inclinée (19) respective,
   – chaque surface inclinée fait avec le plan médian de la bielle un angle compris entre 15° et 45°.

4. Bielle selon l'une ou plusieurs des revendications 1 à 3, dans laquelle :
   – le corps de bielle (4) a une section en I et,
   – les nervures (12) du corps de bielle (4) sont prolongées jusqu'au petit côté (17) de l'embase (5) et sont distantes du joint (10),
   bielle caractérisée en ce que :
   – les nervures d'appui (18) sont reliées aux nervures (12) du corps de bielle (4).

5. Bielle selon l'une ou plusieurs des revendications 1 à 4 dans laquelle :
   – la liaison vissée (14) du chapeau de bielle comprend au moins un perçage traversant (16) passant par une partie de la tête de bielle divisée (2 ; embase 5 ; chapeau de bielle 6) traversée avec du jeu par un boulon (15),
   bielle caractérisée en ce que :
   – les nervures d'appui (18) reliées aux logements recevant les boulons (15) de la liaison vissée (14) sont prévues sur les deux faces (8) de la tête de bielle (2) et de l'embase (5) et du chapeau de bielle (6) dans un plan (8) (E) sensiblement tangent au perçage traversant (16) respectif.